# EUROPÄISCHE PATENTSCHRIFT

(11) **EP 2 015 233 B1**
(45) Veröffentlichungstag und Bekanntmachung des Hinweises auf die Patenterteilung: **12.11.2014**
(21) Anmeldenummer: 08010714.7
(22) Anmeldetag: 12.06.2008
(51) Int. Cl.: G06K 19/077, G06K 19/073

(54) **Tragbarer Datenträger**
Portable data carrier
Support de données portatif

(30) Priorität: 18.06.2007 DE 102007027936
(43) Veröffentlichungstag der Anmeldung: 14.01.2009
(73) Patentinhaber: Giesecke & Devrient GmbH, 81677 München (DE)
(72) Erfinder: Finkenzeller, Klaus, 85774 Unterföhring (DE)

(56) Entgegenhaltungen:
- DE-A1- 10 343 734

## Beschreibung

Die Erfindung bezieht sich auf einen tragbaren Datenträger, insbesondere eine Chipkarte, mit einer piezoelektrischen Schallerzeugungseinrichtung und einer elektronischen Schalteinrichtung.

Ein tragbarer Datenträger im Sinne der Erfindung ist ein Rechnersystem, bei dem die Ressourcen, das heißt Speicherressourcen und/ oder Rechenkapazität (Rechenleistung) begrenzt ist. Insofern sind tragbare Datenträger insbesondere Chipkarten (Smart Card, Mikroprozessor-Chipkarte) oder Token oder Chipmodule zum Einbau in Chipkarten oder Token. Derartige tragbare Datenträger umfassen üblicherweise einen Körper, in dem ein Mikroprozessor (CPU) angeordnet ist, und der jede beliebige standardisierte oder nicht standardisierte Gestalt haben kann, beispielsweise die Gestalt einer flachen Chipkarte ohne Norm oder nach einer Norm wie zum Beispiel ISO 7810 (zum Beispiel ID-1, ID-00, ID-000) oder die eines volumigen Tokens. Solche tragbaren Datenträger können desweiteren eine oder mehrere beliebige Schnittstellen für kontaktlose und/ oder kontaktbehaftete Kommunikation mit einem Lesegerät oder Datenverarbeitungssystem (zum Beispiel Personal Computer, Workstation, Server) haben. Der Mikroprozessor ist üblicherweise in einem Chipmodul integriert. Desweiteren können in solchen Datenträgern Displays, von außen betätigbare Schalteinrichtungen, insbesondere mechanische Taster, und Energiespeicher, insbesondere eine Batterie, enthalten sein.

Darüber hinaus können derartige Datenträger mit elektronischen Schallgebern, etwa als Lautsprecher oder Summer, ausgestattet sein. Es ist bekannt, derartige Schallgeber mittels piezokeramischen Schallgebermembranen zu realisieren. Dabei kommen dünne Piezoscheiben zum Einsatz, die über eine Metallisierung auf Vorder- und/oder Rückseite kontaktiert werden. Die elektrische Kontaktierung der Schallgebermembran erfolgt dabei durch Aufbringung des Schallgebers auf ein entsprechend ausgeführtes Leiterbahnlayout (beispielsweise durch Aufbringung auf eine als Inlayfolie in einer Chipkarte integrierten flexiblen Leiterplatte) oder mittels Drahtanschlüssen. Gegen Beschädigung und Umwelteinflüsse ist der Schallgeber geschützt, indem er durch eine Deckfolie, beispielsweise eine Kunststofffolie mit einer Dicke von 0,2 bis 0,5 mm, abgedeckt wird. Die akustischen Eigenschaften solcher piezoelektrischer Schallerzeugungseinrichtungen sind jedoch nicht ideal und haben nur einen sehr geringen Wirkungsgrad, das heißt, es ist damit nur eine geringe Lautstärke erzielbar.

Aus der DE 103 43 734 A1 geht ein Datenträger mit einem IC-Modul, einer Antenne zur drahtlosen Datenübertragung und einer aufladbaren Batterie hervor. Mit dieser Datenträgerkarte soll eine bewusste Aktivierung eines Identifikationsvorgangs bzw. einer Datenübertragung über einen größeren Abstand ermöglicht werden. Die Datenträgerkarte kann mit einem Piezoschallgeberelement versehen sein, dass das Betätigen eines Tasters durch einen spürbaren und hörbaren Schaltvorgang anzeigt.

Aufgabe der vorliegenden Erfindung ist es daher, den Wirkungsgrad von in tragbaren Datenträgern integrierten piezoelektrischen Schallerzeugungseinrichtungen zu verbessern.

Dies wird erfindungsgemäß durch einen Datenträger nach Anspruch 1 erzielt.

Durch diese Anordnung wird erreicht, dass der von der Schallgebermembran erzeugte Schall den Hohlraum der Schalteinrichtung durchlaufen kann, wobei der Hohlraum einschließlich etwaiger darin untergebrachter Elemente der elektronischen Schalteinrichtung als Resonanzkörper wirkt. Insbesondere kann eine äußere Abdeckung des Hohlraums als Membran wirken und die Abstrahlung des erzeugten Schalls zusätzlich verstärken.

Andererseits kann die den Hohlraum überspannende Abdeckdung derart elastisch deformierbar sein, dass durch Drücken der Abdeckung in den Hohlraum hinein die elektronische Schalteinrichtung betätigt wird. Die Abdeckung bildet bei dieser Anordnung somit gleichzeitig einen Bestandteil eines mechanischen Tasters, so dass sie funktional sowohl der Schallerzeugungseinrichtung als auch der elektronischen Schalteinrichtung zugeordnet ist.

Die elektronische Schalteinrichtung kann aber auch einen in anderer Weise ausgebildeten mechanischen Taster umfassen, sofern ein mit der piezoelektrischen Schallerzeugungseinrichtung verbundener Hohlraum verbleibt, der als Resonanzkörper für die von der Schallerzeugungseinrichtung erzeugten Schallwellen dient. So kann der mechanische Taster beispielsweise eine in dem Hohlraum angeordnete Schnappscheibe umfassen. Die Schnappscheibe kann in dem Hohlraum wiederum mittels der vorgenannten, den Hohlraum überspannenden elastisch deformierbaren Abdeckung fixiert sein. Verschiedene Varianten zum Einbau derartiger mechanischer Taster in tragbare Datenträger, insbesondere Chipkarten, werden beispielsweise in der WO 2006/136229 A1 beschrieben. Die dort beschriebenen mechanischen Taster besitzen teilweise eine Schnappscheibe, kommen aber teilweise auch ohne Schnappscheibe aus. Soweit eine Schnappscheibe vorgesehen ist, wird diese mittels der elastisch deformierbaren Abdeckung heruntergedrückt und schnappt in eine Position, in welcher sie elektrische Anschlüsse miteinander leitend verbindet. Ohne eine solche Schnappscheibe dient die elastisch deformierbare Abdeckung selbst als elektrisch leitendes Verbindungselement im heruntergedrückten Zustand.

Vorteilhafter Weise sind zumindest ein elektrisches Kontaktelement der elektronischen Schalteinrichtung und die piezoelektrische Schallerzeugungseinrichtung auf einer gemeinsamen Leiterplatte angeordnet. Dadurch lässt sich der Aufwand zur Herstellung des tragbaren Datenträgers reduzieren.

Insbesondere kann die Leiterplatte als flexible Folie ausgebildet sein. Dann lässt sie sich vorteilhaft als sogenannte Inlayfolie in einen kartenförmigen Datenträger integrieren. Bei einem mehrschichtig laminierten Kartenkörper kann die Leiterplatte z.B. eine laminierte Schicht des Kartenkörpers bilden. Der Hohlraum zur Aufnahme der elektronischen Schalteinrichtung kann vorteilhaft nach vollständiger oder teilweiser Fertigstellung des laminierten Kartenkörpers in den Kartenkörper eingefräst werden, insbesondere wenn der Kartenkörper im Heißlaminierverfahren hergestellt wird, wobei mit dem Fräsen des Hohlraums gleichzeitig Kontaktanschlüsse für die elektronische Schalteinrichtung am Grund des Hohlraums freigelegt werden. Es ist aber auch möglich, den Hohlraum dadurch zu bilden, dass mehrere mit Durchbrüchen versehene Schichten so übereinander liegend miteinander laminiert werden, dass die Durchbrüche den Hohlraum im Kartenkörper bilden.

Die elektronische Schalteinrichtung und die piezoelektrische Schallerzeugungseinrichtung sind erfindungsgemäss auf einander gegenüberliegenden Seiten der Leiterplatte angeordnet. In diesem Falle ist eine Durchbrechung in der Leiterplatte vorgesehen, um die von der Schallerzeugungseinrichtung erzeugten Schallwellen in den oberhalb der Leiterplatte gelegenen Hohlraum zu leiten. Der Vorteil dieser Ausgestaltung besteht darin, dass sowohl für die piezoelektrische Schallerzeugungseinrichtung als auch für die elektronische Schalteinrichtung der auf der Leiterplatte verfügbare Raum maximal ist. Durchkontaktierungen durch die Leiterplatte können vorgesehen sein, um die elektronische Schalteinrichtung und die piezoelektrische Schallerzeugungseinrichtung miteinander und/ oder mit einem auf einer Seite der Leiterplatte angeordneten Mikrocontroller zu verbinden.

Gemäß einer besonderen Weiterbildung der Erfindung kann die piezoelektrische Schallerzeugungseinrichtung mit der elektronischen Schalleinrichtung auch derart gekoppelt sein, dass sie bei Betätigung der Schalteinrichtung ein Geräusch erzeugt, sozusagen als akustische Rückkopplung bei einem Schaltvorgang. Dies ist insbesondere bei Tastschaltern günstig, die bei Betätigung keiner besonderen Verformung unterliegen, beispielsweise im Falle elektronischer Tastschalter.

Nachfolgend wird die Erfindung beispielhaft anhand der begleitenden Zeichnungen erläutert. Darin zeigen:
- Fig. 1: eine erfindungsgemäß ausgebildete Chipkarte in einer schematischen Schnittdarstellung,
- Fig. 2: die in Figur 1 dargestellte Chipkarte in einer schematischen Aufsicht,
- Fig. 3: ein konkretes Ausführungsbeispiel der Chipkarte aus Figur 1 in einer schematischen Schnittdarstellung,
- Fig. 4: das Kontaktlayout für einen mechanischen Taster, wie er im Ausführungsbeispiel nach Figur 3 eingesetzt ist, und
- Fig. 5: einen vergrößerten, detaillierteren Ausschnitt aus der schematischen Darstellung gemäß Figur 3.

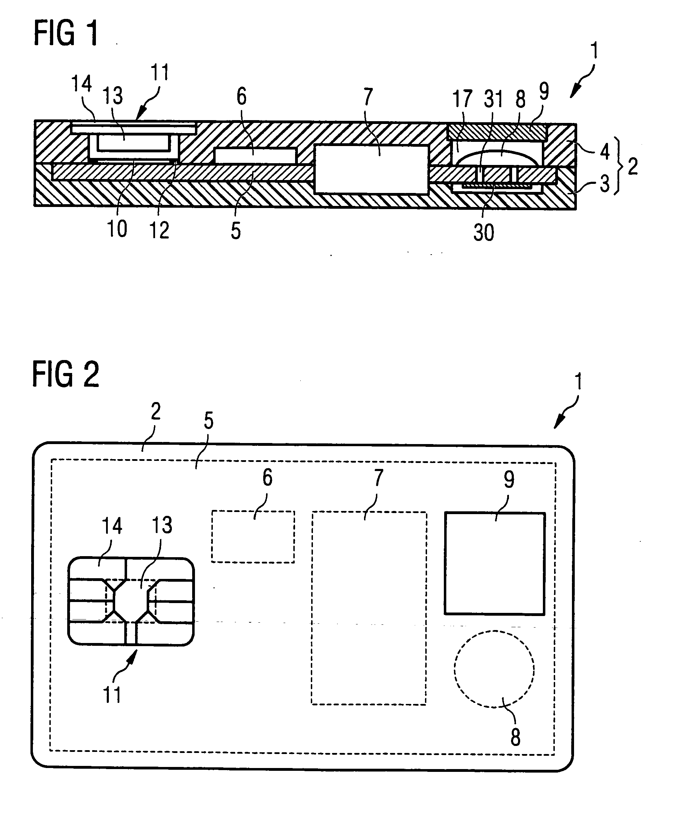

Fig. 1 zeigt eine erfindungsgemäß ausgebildete Chipkarte 1 in einer schematischen Schnittdarstellung. Die Darstellung ist nicht streng auf eine Schnittebene begrenzt, sondern zeigt auch gegeneinander versetzt angeordnete Komponenten der Chipkarte 1. Aus Gründen der Anschaulichkeit ist die Darstellung stark unmaßstäblich ausgeführt. Eine zugehörige Aufsicht auf die Chipkarte 1, bei der auch im Inneren der Chipkarte 1 angeordnete Komponenten gezeigt sind, ist in Figur 2 dargestellt.

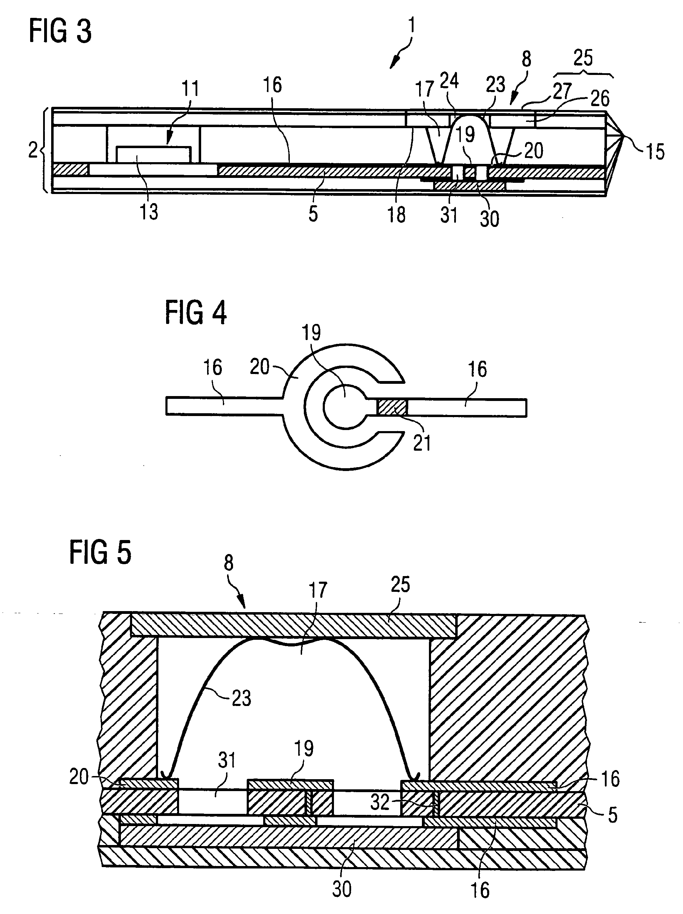

Die Chipkarte 1 weist einen Kartenkörper 2 auf, der bezüglich seiner Abmessungen gemäß der Norm ISO/IEC 7810 ausgebildet sein kann und beim dargestellten Ausführungsbeispiel aus einer unteren Halbschale 3 und einer oberen Halbschale 4 zusammengesetzt ist. Die Halbschalen 3 und 4 sind vorzugsweise aus Kunststoff gefertigt. Zwischen den Halbschalen 3 und 4 ist eine flexible Leiterplatte 5 mit einem ersten Mikrocontroller 6, einer Batterie 7, einem Taster 8 und einer Anzeigeeinrichtung 9 angeordnet. Der Taster 8 und die Anzeigeeinrichtung 9 sind in Figur 1 unmittelbar übereinander dargestellt, sind aber tatsächlich zueinander versetzt, wie sich aus der Aufsicht gemäß Figur 2 ergibt. Der Taster 8 ist darüber hinaus nur symbolisch dargestellt und wird anhand der Figuren 3 bis 5 noch im einzelnen erläutert.

In einer zweistufig ausgebildeten Vertiefung 10 in der oberen Halbschale 4 ist ein Chipmodul 11 angeordnet und über elektrische Verbindungselemente 12 mit der Leiterplatte 5 verbunden. Die elektrischen Verbindungselemente 12 können insbesondere als "flexible Bumps" ausgebildet sein, die einen gewissen Spielraum bei der Positionierung des Chipmoduls 11 zulassen, so dass das Chipmodul 11 bündig zur Oberfläche des Kartenkörpers 2 ausgerichtet werden kann. Zur mechanischen Fixierung ist das Chipmodul 11 mit dem Kartenkörper 2 verklebt. Das Chipmodul 11 weist einen zweiten Mikrocontroller 13 auf, in dem beispielsweise eine Anwendungssoftware der Chipkarte 1 implementiert ist. Das Chipmodul 11 weist desweiteren ein Kontaktfeld 14 auf, das von einem nicht figürlich dargestellten externen Gerät insbesondere für eine Datenübertragung kontaktierbar ist. Das Kontaktfeld 14 kann aber auch entfallen, wenn ausschließlich eine kontaktlose Datenübertragung vorgesehen ist.

Der erste Mikrocontroller 6 dient beim dargestellten Ausführungsbeispiel der Ansteuerung der Anzeigevorrichtung 9, so dass der zweite Mikrocontroller 13 über den ersten Mikrocontroller 6 Zugriff auf die Anzeigevorrichtung 9 hat. Der Taster 8 kann je nach Ausführungsbeispiel unterschiedliche und insbesondere auch mehrere Aufgaben übernehmen. Beispielsweise kann er zur Aktivierung der Anzeigevorrichtung 9 dienen und/ oder zum Zurücksetzen des ersten Mikrocontrollers 6 in einen definierten Zustand.

Unterhalb der flexiblen Leiterplatte 5 gegenüberliegend zum Taster 8 ist eine piezoelektrische Schallerzeugungseinrichtung 30 vorgesehen. Die Schallerzeugungseinrichtung 30 ist über die Leiterplatte 5 von dem ersten und/oder zweiten Mikrocontroller 6,13 ansteuerbar. Die von der Schallerzeugungseinrichtung erzeugten Schallwellen gelangen durch Öffnungen 31 in der Leiterplatte 5 hindurch in einen Hohlraum 32, in welchem der Taster 8 untergebracht ist.

Figur 3 zeigt eine Ausführungsvariante der Chipkarte 1 mit einem konkreten Ausführungsbeispiel der hier als mechanischer Taster 8 ausgebildeten elektronischen Schalteinrichtung in einer schematischen Schnittdarstellung. Die Darstellung ist wiederum aus Gründen der Anschaulichkeit stark unmaßstäblich. Der Kartenkörper 2 der Chipkarte 1 ist hier aus mehreren Kunststofffolien 15 hergestellt. Bei der dargestellten Variante wurden sechs Kunststofffolien 15 verwendet. Als Material für die Kunststofffolien 15 eignet sich beispielsweise PVC. Zuvor werden auf wenigstens eine der Kunststofffolien 15 Leiterbahnen 16 aufgebracht, beispielsweise durch Bedrucken mit Silberleitpaste, wodurch die betreffende Kunststofffolie die flexible Leiterplatte 5 bildet. Die Leiterbahnen 16 dienen der Ausbildung elektrischer Verbindungen und/ oder als Antenne.

Der Taster 8 ist in einer Kavität 17 im Kartenkörper 2 integriert. Die Kavität 17 ist zweistufig ausgebildet, so dass sie eine umlaufende Schulter 18 aufweist. Die Kavität 17 wird von der Leiterplatte 5 nach unten begrenzt. Auf dieser Leiterplatte 5 ist ein erster Schaltkontakt 19 in Form einer Kreisscheibe beispielsweise durch Aufbringen von Silberleitpaste ausgebildet. Weiterhin ist dort ein zweiter Schaltkontakt 20 ausgebildet, der die Form eines einseitig offenen Rings aufweist und den ersten Schaltkontakt 19 in einem Abstand konzentrisch umgibt. Dies ist in Figur 4 schematisch in Draufsicht gezeigt. Die Schaltkontakte 19 und 20 gehen jeweils in Leiterbahnen 16 über, die ebenfalls mittels Silberleitpaste ausgebildet sein können. Die Schaltkontakte 19, 20 und/ oder Leiterbahnen 16 können ebenso durch dünne Metallstreifen gebildet werden. Über den Schaltkontakten 19, 20 sitzt in der Kavität 17 eine metallische Schnappscheibe 13. Um einen Kurzschluss der beiden Schaltkontakte 19, 20 im unbetätigten Zustand der Schnappscheibe 23 zu verhindern, ist der Schaltkontakt 19 in einem Bereich 21 auf seiner Oberfläche gegenüber der darüber liegenden Schnappscheibe 23 elektrisch isoliert.

Die Schnappscheibe 13 greift in eine Aussparung 24 eines Deckels 25 ein. Der Deckel 25 besteht aus einer Deckelfolie 26, insbesondere einer FR4-Folie, die gegebenenfalls außenseitig mit einer Metallschicht 27 beschichtet ist. Der Deckel 25 wird beispielsweise mittels eines Heißsiegelklebers im Bereich der Schulter 18 der Kavität 17 derart mit dem Kartenkörper 2 verklebt, dass er die Kavität 17 abdeckt und bündig mit der Oberfläche des Kartenkörpers 2 abschließt. Anstelle einer vollständigen metallischen Schnappscheibe kann wahlweise auch eine teilweise metallische Schnappscheibe mit Kunststoffdom verwendet werden.

Der Taster 8 wird durch Druckausübung auf den Deckel 25 betätigt. Dadurch wölbt sich der Deckel 25 zum Boden der Kavität 17 hin und verschiebt und verformt die Schnappscheibe 23 so, dass diese berührend an beiden Schaltkontakten 19 und 20 anliegt. Sobald der Druck auf den Deckel 25 aufgehoben wird, federt dieser in Folge seiner eigenen Elastizität und der Elastizität der Schnappscheibe 23 in seine Ausgangslage zurück. Dadurch wird der berührende Kontakt zwischen der Schnappscheibe 23 und den beiden Schaltkontakten 19 und 20 aufgehoben und die über die Schnappscheibe 23 ausgebildete elektrische Verbindung wieder unterbrochen. Durch die Schnappscheibe 23 ist bei Betätigung des Tasters 8 eine taktile Rückmeldung spürbar.

Auf der der Schnappscheibe 23 gegenüberliegenden Oberfläche der flexiblen Leiterplatte 5 ist die piezoelektrische Schallerzeugungseinrichtung 30 angeordnet und über dortige Leiterbahnstrukturen elektrisch leitend letztendlich mit dem Mikrocontroller 13 des Chipmoduls 11 verbunden. Über Öffnungen 31 ist die piezoelektrische Schallerzeugungseinrichtung räumlich mit dem auf der gegenüberliegenden Seite der Leiterplatte 5 liegenden Hohlraum 17 verbunden.

Figur 5 zeigt diesen Aufbau in weiterem Detail mit einigen kleineren Unterschieden. Beispielsweise kommt hier der Deckel 25 ohne metallische Beschichtung 24 aus und kann selbst opak ausgebildet sein.

Wie Figur 5 zu entnehmen ist, sind beidseitig der Leiterplatte 5 Leiterbahnen 16 vorhanden, einerseits für die Schnappscheibe 23 und andererseits für die piezoelektrische Schallerzeugungseinrichtung 30. Letztere ist über Kontaktflächen mit der Leiterbahn 16 verbunden. Durchkontaktierungen 32 durch die Leiterplatte 5 hindurch können vorgesehen sein, um die Leiterbahnstrukturen auf den beiden gegenüberliegenden Seiten der Leiterplatte 5 miteinander elektrisch leitend zu verbinden.

Der von der piezoelektrischen Schallerzeugungseinrichtung 30 abgegebene Schall gelangt durch die Öffnungen 31 der Leiterplatte 5 hindurch in den Hohlraum 17 und kann diesen nahezu ungehindert durchlaufen. Der Hohlraum 17 sowie die darin angeordnete Schnappscheibe 23 dienen als Resonanzkörper. Der Deckel 25 wirkt zusätzlich als Membran und kann die Abstrahlung des erzeugten Schalls verstärken.

Die piezoelektrische Schallerzeugungseinrichtung kann vorteilhaft als piezokeramische Schallgebermembran ausgebildet sein. Handelsübliche piezokeramische Schallgebermembranen, wie sie in Chipkarten zum Einsatz kommen, sind kreisförmig und haben einen Gesamtdurchmesser im Bereich von 6,5 bis 15 mm und eine Gesamtdicke im Bereich von 0,15 bis 0,65 mm. Die Abmessungen der üblicherweise in Chipkarten eingesetzten Taster haben ähnliche Durchmesser, so dass die Anordnung der piezoelektrischen Schallerzeugungseinrichtung 30 in dem Hohlraum 17 unter der Druckoberfläche eines an sich bekannten Tasters einfach zu realisieren und mit geringem Aufwand in bestehende Fertigungsabläufe integrierbar ist.

Anstelle der Schnappscheibe 23 kann der mechanische Taster auch durch eine Folientaste ersetzt werden, bei der der Kontakt zwischen den Kontaktflächen 19 und 20 durch das Aufeinanderdrücken zweier metallisierter Folien, bzw. des innenseitig metallisierten Deckels 25 auf die Kontaktflächen der Leiterplatte 5, bewirkt wird. Auch dazu sind in der WO 2006/136229 A1 verschiedene Ausführungsbeispiele angegeben.

Die piezoelektrische Schallerzeugungseinrichtung 30 kann insbesondere dazu dienen, beim Drücken des Tasters 8 ein Geräusch als akustische Rückmeldung für die Betätigung des Tasters zu erzeugen.

## Patentansprüche

1. Tragbarer Datenträger (1), insbesondere Chipkarte, umfassend eine piezoelektrische Schallerzeugungseinrichtung (30), die im Inneren des Datenträgers (1) angeordnet ist, und eine in einem Hohlraum (17) des Datenträgers (1) angeordnete elektronische Schalteinrichtung (8), wobei die piezoelektrische Schallerzeugungseinrichtung (30) derart mit dem Hohlraum (17) der elektronischen Schalteinrichtung (8) räumlich verbunden ist, dass von der Schallerzeugungseinrichtung (30) erzeugbare Schallwellen in den Hohlraum (17) abgegeben werden, wobei die elektronische Schalteinrichtung (8) mindestens ein elektrisches Kontaktelement (19, 20) auf einer Leiterplatte (5) umfasst, **dadurch gekennzeichnet, dass** das Kontaktelement (19, 20) und die Schallerzeugungseinrichtung (30) auf einander gegenüberliegenden Seiten der Leiterplatte (5) angeordnet sind, wobei die von der Schallerzeugungseinrichtung (30) erzeugbaren Schallwellen durch mindestens eine Durchbrechung (31) der Leiterplatte (5) hindurch in den auf der anderen Seite der Leiterplatte (5) liegenden Hohlraum (17) abgegeben werden.

2. Datenträger nach Anspruch 1, **dadurch gekennzeichnet, dass** die elektronische Schalteinrichtung (8) einen mechanischen Taster umfasst.

3. Datenträger nach Anspruch 2, **dadurch gekennzeichnet, dass** der mechanische Taster eine den Hohlraum überspannende elastisch deformierbare Abdeckung (25) derart umfasst, dass die elektronische Schalteinrichtung (8) durch Drücken der Abdeckung (25) in den Hohlraum (17) hinein betätigbar ist.

4. Datenträger nach Anspruch 2 oder 3, **dadurch gekennzeichnet, dass** der mechanische Taster eine im Hohlraum angeordnete Schnappscheibe (23) umfasst.

5. Datenträger nach einem der vorhergehenden Ansprüche, **dadurch gekennzeichnet, dass** er kartenförmig ausgebildet ist und einen mehrschichtig laminierten Kartenkörper (2) umfasst, wobei die Leiterplatte (5) eine laminierte Schicht (15) des Kartenkörpers (2) bildet.

6. Datenträger nach einem der Ansprüche 1 bis 5, **dadurch gekennzeichnet, dass** die Schallerzeugungseinrichtung (30) eine piezokeramische Schallgebermembran umfasst.

7. Datenträger nach einem der Ansprüche 1 bis 6, **dadurch gekennzeichnet, dass** die Schallerzeugungseinrichtung (30) mit der elektronischen Schalteinrichtung (8) derart gekoppelt ist, dass sie bei Betätigung der elektronischen Schalteinrichtung (8) ein Geräusch erzeugt.

8. Datenträger nach einem der Ansprüche 1 bis 7, **dadurch gekennzeichnet, dass** der Datenträger eine Chipkarte oder ein Token ist.

## Claims

1. A portable data carrier (1), in particular a chip card, comprising a piezoelectric sound generation device (30) arranged on the inside of the data carrier (1), and an electronic switching device (8) arranged in a hollow space (17) of the data carrier (1), wherein
the piezoelectric sound generation device (30) is so spatially connected with the hollow space (17) of the electronic switching device (8) that sound waves producible by the sound generation device (30) are emitted to the hollow space (17), wherein the electronic switching device (8) comprises at least one electrical contact element (19, 20) on a circuit board (5),
**characterized in that** the contact element (19, 20) and the sound generation device (30) are arranged on mutually opposing sides of the circuit board (5), wherein the sound waves producible by the sound generation device (30) are emitted through at least one aperture (31) of the circuit board (5) to the hollow space (17) disposed on the other side of the circuit board (5).

2. The data carrier according to claim 1, **characterized in that** the electronic switching device (8) comprises a mechanical push-button.

3. The data carrier according to claim 2, **characterized in that** the mechanical push-button so comprises an elastically deformable cover (25) spanning the hollow space, that the electronic switching device (8) is operable by pressing the cover (25) into the hollow space (17).

4. The data carrier according to claim 2 or 3, **characterized in that** the mechanical push-button comprises a snap disk (23) arranged in the hollow space.

5. The data carrier according to any of the preceding claims, **characterized in that** it is configured to be card-shaped and comprises a card body (2) laminated in multilayer fashion, wherein the circuit board (5) forms a laminated layer (15) of the card body (2).

6. The data carrier according to any of the claims 1 to 5, **characterized in that** the sound generation device (30) comprises a piezoceramic sound generator membrane.

7. The data carrier according to any of the claims 1 to 6, **characterized in that** the sound generation device (30) is so coupled with the electronic switching device (8) that it produces a sound upon operation of the electronic switching device (8).

8. The data carrier according to any of the claims 1 to 7, **characterized in that** the data carrier is a chip card or a token.

## Revendications

1. Support de données (1) portable, notamment carte à puce, comprenant un dispositif piézoélectrique de génération de son (30) agencé à l'intérieur du support de données (1) et un dispositif électronique de commutation (8) agencé dans une cavité (17) du support de données (1), le dispositif piézoélectrique de génération de son (30) étant relié spatialement de telle manière avec la cavité (17) du dispositif électronique de commutation (8) que des ondes sonores pouvant être générées par le dispositif de génération de son (30) sont émises dans la cavité (17), le dispositif électronique de commutation (8) comprenant au moins un élément de contact électrique (19, 20) sur une carte imprimée (5),
**caractérisé en ce que** l'élément de contact (19, 20) et le dispositif de génération de son (30) sont agencés sur des côtés opposés l'une à l'autre de la carte imprimée (5), les ondes sonores pouvant être générées par le dispositif de génération de son (30) étant émises, à travers au moins un transpercement (31) de la carte imprimée (5), dans la cavité (17) se trouvant de l'autre côté de la carte imprimée (5).

2. Support de données selon la revendication 1, **caractérisé en ce que** le dispositif électronique de commutation (8) comprend un palpeur mécanique.

3. Support de données selon la revendication 2, **caractérisé en ce que** le palpeur mécanique comprend de telle manière un recouvrement (25) déformable élastique enjambant la cavité que le dispositif électronique de commutation (8) est actionnable en pressant le recouvrement (25) dans la cavité (17).

4. Support de données selon la revendication 2 ou 3, **caractérisé en ce que** le palpeur mécanique comprend un disque à déclic (23) agencé dans la cavité.

5. Support de données selon une des revendications précédentes **caractérisé en ce qu'**il est réalisé en forme de carte et comprend un corps de carte (2) laminé multicouche, la carte imprimée (5) constituant une couche laminée (15) du corps de carte (2).

6. Support de données selon une des revendications de 1 à 5, **caractérisé en ce que** le dispositif de génération de son (30) comprend une membrane de source sonore piézocéramique.

7. Support de données selon une des revendications de 1 à 6, **caractérisé en ce que** le dispositif de génération de son (30) est couplé de telle manière avec le dispositif électronique de commutation (8) qu'il génère un bruit lors de l'actionnement du dispositif électronique de commutation (8).

8. Support de données selon une des revendications de 1 à 7, **caractérisé en ce que** le support de données est une carte à puce ou un jeton.
